# EUROPEAN PATENT APPLICATION

(11) **EP 4 641 879 A1**
(43) Date of publication of application: **29.10.2025**
(21) Application number: 24797237.5
(22) Date of filing: 12.01.2024
(51) Int. Cl.: H02J 7/00, B60L 58/19, H01M 10/44, H01M 50/204, H01M 50/249

(54) **BATTERY PACK, CHARGING METHOD THEREFOR AND ELECTRIC VEHICLE COMPRISING SAME**

(30) Priority: 26.04.2023 KR 20230054641
(71) Applicant: LG Energy Solution, Ltd., Seoul 07335 (KR)
(72) Inventor: CHAE, Seung Min, Daejeon 34122 (KR)
(74) Representative: Plasseraud IP
(86) International application number: PCT/KR2024/000592
(87) International publication number: WO 2024/225574

(57) **Abstract**

The present invention provides a battery pack including a first and second battery module groups, a battery pack positive terminal connected to a positive terminal of the second battery module group and connected to an output of an external charging system, a battery pack negative terminal to which a negative terminal of the first battery module group is connected, first and second switches respectively provided on paths between positive terminals and negative terminals of the first and second battery module groups to open and close parallel connection paths of the first and second battery module groups, and a third switch provided between the first and second battery module groups and provided on a path between the positive terminal of the first battery module group and the negative terminal of the second battery module group to open and close a serial connection path of the first and second battery module groups, a charging method thereof, and an electric vehicle having the same.

## Description

### TECHNICAL FIELD

The present invention relates to a battery pack, and particularly to a battery pack that can be charged to 800 V using a 400 V class charger without a DC/DC converter, a charging method thereof, and an electric vehicle having the battery pack.

### BACKGROUND ART

A secondary battery capable of charging and discharging, that is, a battery, is widely used as an energy source for mobile devices such as smart phones. Furthermore, the battery is used as an energy source for eco-friendly vehicles such as an electric vehicle and a hybrid electric vehicle proposed as a solution to air pollution caused by a gasoline vehicle and a diesel vehicle using fossil fuels. The types of applications using the battery are becoming very diverse, and it is expected that the battery will be applied to more fields and products than now in the future.

Currently commercialized available batteries include a nickel cadmium battery, a nickel hydrogen battery, a nickel zinc battery, and a lithium ion battery. Among these batteries, the lithium ion battery is spotlighted due to their advantages of free charge and discharge because the memory effect hardly occurs, very low self-discharge rate, and high energy density compared to the nickel-based battery. In addition, since the lithium ion battery can be manufactured to be lightweight in a small size, the lithium ion battery is used as a power source for mobile devices, and the use range thereof has been expanded as a power source for the electric vehicle, thereby drawing attention as a next-generation energy storage medium.

These batteries are generally used in the form of a battery pack rather than as a single battery cell. The battery pack includes at least one or more battery modules, and the battery module may be composed of a plurality of battery cells. The battery pack is being developed with high-capacity and high-voltage specifications so that it can be used for a longer time and driven more powerfully according to consumer demands. In addition, a battery management system (BMS) is provided to manage the overall state of the battery cell, the battery module, or the battery pack.

Meanwhile, the voltage of the battery pack used in the electric vehicle tends to increase from 400 V to 800 V. A 400 V battery pack is obtained by connecting a plurality of battery modules in series at 400 V, and an 800 V battery pack is obtained by connecting a plurality of battery modules in series at 800 V. That is, a plurality of battery modules with battery cells connected in series, parallel, or series-parallel are connected in series to form the 400 V or 800 V battery pack. Here, the 800 V battery pack can increase the voltage while lowering the current, thereby improving the efficiency and performance of the electric vehicle.

By the way, an 800 V class charger is needed to charge the 800 V battery pack, but so far, the 800 V class charger has not been widely distributed than a 400 V class charger. Therefore, it may be necessary to charge the 800 V battery pack using the 400 V class charger, but the 800 V battery pack cannot be charged using the 400 V class charger. That is, when a charging voltage of the charger is higher than a voltage of the battery pack, the battery pack can be charged. However, since the charging voltage of the 400 V class charger is lower than that of the 800 V battery pack, the 800 V battery pack cannot be charged using the 400 V class charger.

In order to charge the 800 V battery pack using the 400 V class charger, a separate DC/DC converter should be provided within the electric vehicle. That is, in the electric vehicle, the charger voltage of 400 V should be boosted to 800 V using the DC/DC converter to charge the battery pack. However, there is a problem of increasing manufacturing costs by providing the DC/DC converter within the electric vehicle, and when the power conversion efficiency of the DC/DC converter is reduced, a problem may occur that the battery pack is not charged to a desired voltage.

Related prior art includes Korean patent publication No. 10-2019-0069923.

### DISCLOSURE OF THE INVENTION

### TECHNICAL PROBLEM

The present invention provides a battery pack that can be charged even using a charger with a charging voltage lower than the battery pack voltage, a charging method thereof, and an electric vehicle having the same.

The present invention provides a battery pack that can be charged to 800 V using a 400 V class charger without a DC/DC converter, a charging method thereof, and an electric vehicle having the same.

The present invention provides a battery pack configured with multiple battery modules that are sequentially charged based on the charging voltage of the charger, a charging method thereof, and an electric vehicle equipped with the same.

### TECHNICAL SOLUTION

A battery pack according to an example of the present invention includes a first and second battery module groups, a battery pack positive terminal connected to a positive terminal of the second battery module group and connected to an output of an external charging system, a battery pack negative terminal connected to a negative terminal of the first battery module group is connected, first and second switches respectively provided on a path between positive terminals and a path between negative terminals of the first and second battery module groups to open and close parallel connection paths of the first and second battery module groups, and a third switch provided between the first and second battery module groups and provided on a path between the positive terminal of the first battery module group and the negative terminal of the second battery module group to open and close a serial connection path of the first and second battery module groups.

The first switch is configured to open and close the path between the positive terminals of the first and second battery module groups, the second switch is configured to open and close the path between the negative terminals of the first and second battery module groups, and the third switch is configured to open and close the path between the positive terminals of the first and second battery module groups and the negative terminals of the first and second battery module groups.

When the battery pack positive terminal and the battery pack negative terminal are connected to the external charging system, the first to third switches are controlled to be turned on/off so that the first and second battery module groups are connected in series and charged at once, or the first and second battery module groups are selectively or sequentially charged, depending on a comparison result between a charging voltage of the external charging system and a battery pack voltage.

When the charging voltage is greater than the battery pack voltage, the third switch is turned on and the first and second switches are turned off, so that the first and second battery module groups are connected in series and charged at once.

When the charging voltage is less than the battery pack voltage and greater than voltages of the first and second battery module groups, the third switch is turned off and the first and second switches are sequentially turned on to control the first and second battery module groups to be sequentially charged.

In claim 3, each of the first and second battery module groups is configured to include a plurality of battery modules, a plurality of unit series switches respectively connected in series between the respective two of the plurality of battery modules, and a plurality of unit parallel switches respectively connected in parallel to the respective one of the plurality of battery modules, and, when the charging voltage is lower than the voltages of the first and second battery module groups, the first and second switches are sequentially turned on and the unit series switch and unit parallel switch are selectively driven to selectively charge a plurality of battery modules of each of the first and second battery module groups.

A battery pack charging method according to another example of the present invention includes a process of comparing a battery pack voltage and a charging voltage of an external charging system, a process charging the first and second battery module groups at once by connecting the first and second battery module groups in series when the charging voltage of the external charging system is greater than the battery pack voltage, a process sequentially charging the first and second battery module groups when the charging voltage of the external charging system is less than the battery pack voltage and greater than voltages of the first and second battery module groups, and a process of selectively charging a plurality of battery modules of each of the first and second battery module groups when the charging voltage of the external charging system is lower than the voltages of the first and second battery module groups.

When the charging voltage is greater than the battery pack voltage, the third switch is turned on and the first and second switches are turned off, so that the first and second battery module groups are connected in series and charged at once.

When the charging voltage is less than the battery pack voltage and greater than the voltages of the first and second battery module groups, the first and second switches are sequentially turned on to sequentially charge the first and second battery module groups.

When the charging voltage is lower than the voltages of the first and second battery module groups, the first and second switches are sequentially turned on and the unit series switch and unit parallel switch are selectively controlled to be turned on/off to selectively charge a plurality of battery modules of each of the first and second battery module groups.

An electric vehicle according to still another example of the present invention includes a battery pack, a battery management system that manages the battery pack, an inverter that converts power from the battery pack into power for driving a motor, and a motor that drives the electric vehicle by receiving electrical energy from the battery pack through the inverter, and the battery pack includes first and second battery module groups, first and second switches respectively provided between a charging system and the first and second battery module groups, and a third switch that connects the first and second battery module groups by being provided therebetween.

The battery management system includes a control unit that controls the switches by comparing a charging voltage and a battery pack voltage during charging of the battery pack.

The control unit controls the switches according to a comparison result between the charging voltage of the charging system and the battery pack voltage to charge the first and second battery module groups or selectively charge a plurality of battery modules of each of the first and second battery module groups.

When the charging voltage is greater than the battery pack voltage, the third switch is turned on and the first and second switches are turned off, so that the first and second battery module groups are connected in series and charged at once.

When the charging voltage is less than the battery pack voltage and greater than voltages of the first and second battery module groups, the first and second switches are sequentially turned on to sequentially charge the first and second battery module groups.

Each of the first and second battery module groups includes a plurality of battery modules, a plurality of unit series switches respectively connected in series between the respective two of the plurality of battery modules, and a plurality of unit parallel switches respectively connected in parallel to the respective one of the plurality of battery modules, and, when the charging voltage is lower than the voltages of the first and second battery module groups, the first and second switches are sequentially turned on and the unit series switch and unit parallel switch are selectively driven to selectively charge a plurality of battery modules of each of the first and second battery module groups.

The battery management system turns on the third switch during discharging of the battery pack to connect the first and second battery module groups in series and discharge the first and second battery module groups.

### ADVANTAGEOUS EFFECTS

The battery pack of the present invention includes the first and second battery module groups, and the first and second battery module groups can be respectively connected to the charging system through the first and second switches, and can be connected in series to each other through the third switch. In addition, each of the first and second battery module groups includes a plurality of battery modules. In each of the first and second battery module groups, switches are respectively connected in series between the respective two of the plurality of battery modules, and a plurality of switches are respectively connected in parallel with the respective one of the plurality of battery modules. In the battery pack of the present invention, during charging, the first and second battery module groups are charged by controlling the first and second switches, respectively, according to the comparison result between the charging voltage of the charging system and the battery pack voltage, and the number of charging of the battery modules are adjusted by respectively controlling a plurality of switches connected in series and parallel to the plurality of battery modules. In addition, during discharging, the third switch is controlled to connect the first and second battery module groups in series, and each of the plurality of switches is controlled to cause discharge from the battery modules.

Therefore, in the present invention, the battery pack can be charged by using a charger having a charging voltage lower than the battery pack voltage even without having a separate DC/DC converter within the electric vehicle.

### BRIEF DESCRIPTION OF THE DRAWINGS

FIG. 1 is a block diagram for describing an electric vehicle including a battery pack and a charging system according to an embodiment of the present invention.
FIG. 2 is a block diagram for describing a battery pack according to an embodiment of the present invention.
FIG. 3 is a block diagram for describing a battery module group constituting the battery pack according to an embodiment of the present invention.
FIG. 4 is a flowchart for describing a method of controlling the battery pack according to an embodiment of the present invention.
FIGS. 5 to 8 are block diagrams for describing charging and discharging of the battery pack according to an embodiment of the present invention.
FIGS. 9 and 10 are block diagrams for describing a method of charging the battery module group according to an embodiment of the present invention.

### MODE FOR CARRYING OUT THE INVENTION

Hereinafter, embodiments of the present invention will be described in detail with reference to the accompanying drawings. However, the present invention is not limited to the embodiments disclosed below, but will be implemented in a variety of different forms, and these embodiments are provided only to complete the disclosure of the present invention and to fully inform those skilled in the art of the scope of the invention.

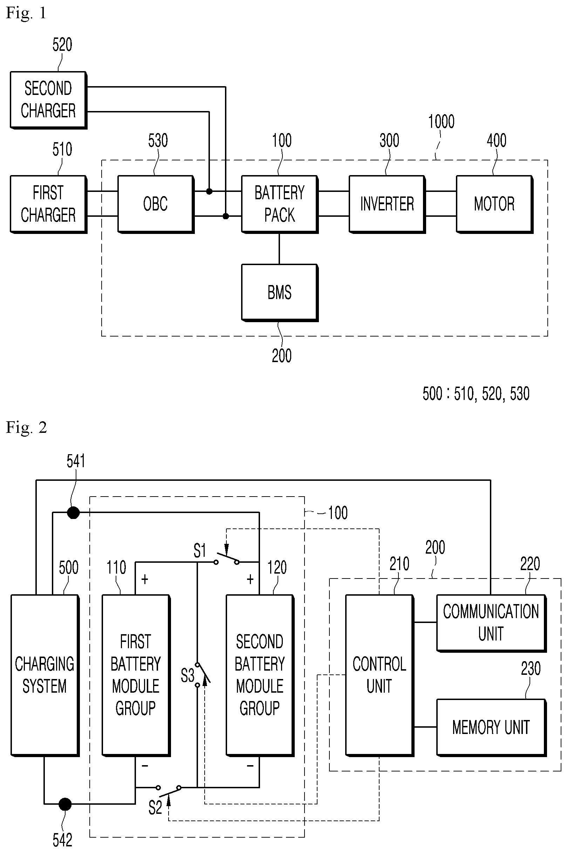

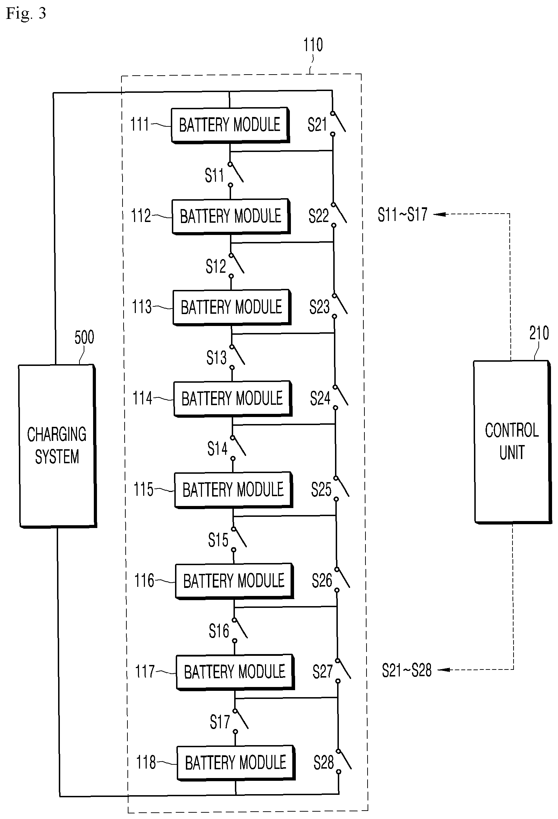

FIG. 1 is a block diagram illustrating an electric vehicle provided with a battery pack and a charging system according to an embodiment of the present invention. That is, FIG. 1 is a block diagram for describing a configuration of the electric vehicle and a charging system for charging the electric vehicle. In addition, FIG. 2 is a block diagram for describing the battery pack according to an embodiment of the present invention, and FIG. 3 is a block diagram for describing a battery module group constituting the battery pack according to an embodiment of the present invention.

Referring to FIGS. 1 to 3, an electric vehicle 1000 to which the present invention is applied may include a battery pack 100 according to the present invention that is capable of being charged and discharged and provides electrical energy for driving the electric vehicle, a battery management system (BMS) 200 that manages the battery pack 100, an inverter 300 that converts power from the battery pack 100 into power for driving a motor 400, and the motor 400 that receives electrical energy from the battery pack 100 through the inverter 300 to drive the electric vehicle. In addition, a charging system 500 for charging the battery pack 100 may include first and second chargers 510 and 520 that supply charging power for the battery pack 100 and an on-board charger (OBC) 530 that converts AC power supplied from the first charger 510 into DC power and supplies it to the battery pack 100. Here, the first and second chargers 510 and 520 are provided outside the electric vehicle 1000 and connected to the electric vehicle 1000 for charging the electric vehicle 1000, and the OBC 530 is provided inside the electric vehicle 1000 and is connected to the first charger 510 during charging. The electric vehicle 1000 and the charging system according to an embodiment of the present invention will be described in more detail for each component as follows.

### 1. Battery pack

The battery pack 100 can be charged and discharged, and is an electrical energy source that provides energy to the electric vehicle to drive the electric vehicle. Here, the battery pack 100 may include a plurality of battery modules, and each of the battery modules may include a plurality of battery cells that can be charged and discharged. That is, the plurality of battery cells may be grouped into a predetermined unit to form the battery module, and a plurality of battery modules may form one battery pack 100. Here, the battery cell may include a lithium ion battery. However, the battery cell may be composed of not only a lithium-ion battery, but also a lithium polymer battery, a nickel-cadmium battery, a nickel-hydrogen battery, a nickel-zinc battery, etc.

In addition, the battery pack 100 according to the present invention may include first and second battery module groups 110 and 120 as illustrated in FIG. 2. Here, each of the first and second battery module groups 110 and 120 may have a voltage of, for example, 400 V. That is, each of the first and second battery module groups 110 and 120 may be charged to a maximum of 400 V. In addition, the first and second battery module groups 110 and 120 may be connected to the charging system 500 through first and second switches S1 and S2, respectively, and may be connected to each other through a third switch S3. Here, the first switch S1 may be provided between a positive terminal of the first battery module group 110 and a positive terminal of the second battery module group 120, and the second switch S2 may be provided between a negative terminal of the first battery module group 110 and a negative terminal of the second battery module group 120. That is, the first and second switches S1 and S2 are provided on path between the positive terminals and path between the negative terminals of the first and second battery module groups 110 and 120 to open and close parallel connection paths of the first and second battery module groups 110 and 120. In addition, the third switch S3 may be provided between the positive terminals of the first and second battery module groups 110 and 120 and the negative terminals of the first and second battery module groups 110 and 120. If the third switch S3 is turned on, the first and second battery module groups 110 and 120 may be connected in series. That is, the third switch S3 is provided on the path between the positive terminal of the first battery module group 110 and the negative terminal of the second battery module group 120 to open and close a serial connection path of the first and second battery module groups 110 and 120. Accordingly, if the first switch S1 is turned on, the first battery module group 110 is charged, and if the second switch S2 is turned on, the second battery module group 120 is charged. In this case, the first and second switches S1 and S2 are controlled by a control unit 210 of the BMS 200 during charging of the battery pack 100, and the first and second switches S1 and S2 may be sequentially driven. That is, if the first switch S1 is turned on, the second switch S2 is turned off, and if the second switch S2 is turned on, the first switch S1 is turned off. Of course, the first and second switches S1 and S2 may be simultaneously turned off depending on the charging voltage of the charging system 500. For example, when the charging voltage of the charging system 500 is 800 V, the first and second switches S1 and S2 are turned off and the third switch S3 is turned on to connect the first and second battery module groups 110 and 120 in series, so that the first and second battery module groups 110 and 120 may be charged simultaneously. When the charging voltage of the charging system 500 is 400 V, the first and second switches S1 and S2 may be sequentially turned on to sequentially charge the first and second battery module groups 110 and 120. In addition, the third switch S3 is controlled by the control unit 210 of the BMS 200 during discharging of the battery pack 100. That is, the third switch S3 may be turned on when the charging system 500 is disconnected and the battery pack 100 is discharged. As described above, the battery pack 100 according to the present invention includes, for example, the first and second battery module groups 110 and 120 each having a voltage of 400 V. The first and second battery module groups 110 and 120 may be simultaneously charged through the charging system 500 of 800 V and sequentially charged through the charging system 500 of 400 V.

Each of the first and second battery module groups 110 and 120 may include a plurality of battery modules 111 to 118 as illustrated in FIG. 3. Here, FIG. 3 illustrates the first battery module group 110, and the second battery module group 120 may also include a plurality of battery modules, like the first battery module group 110. In this case, the first and second battery module groups 110 and 120 may be composed of the same number of battery modules. In addition, between a plurality of battery modules 111 to 118, a plurality of switches S11 to S17 may be connected in series, and a plurality of switches S21 to S28 may be connected in parallel thereto. That is, the plurality of unit series switches S11 to S17 may be respectively provided between the respective two of the plurality of battery modules 111 to 118, and the plurality of unit parallel switches S21 to S28 may be respectively connected in parallel to the respective one of the plurality of battery modules 111 to 118. For example, the switch S11 may be connected in series between the first and second battery modules 111 and 112, and the switch S21 may be connected in parallel to the first battery module 111. Here, the plurality of switches S11 to S17 connected in series among the plurality of battery modules 111 to 118 control the number of connections of the battery modules 111 to 118, and the plurality of switches S21 to S28 connected in parallel set a charging path. That is, when a predetermined number of battery modules are connected from one terminal of the charging system 500 among the plurality of unit series switches S11 to S17 connected in series, switches between the one terminal of the charging system and the last battery module among the plurality of switches S11 to S17 connected in series are turned on, and switches starting from the switch connected in parallel to the next battery module after the last battery module among the plurality of switches S21 to S28 connected in parallel to switches connected to the other terminal of the charging system are turned on. For example, when the first to fourth battery modules 111 to 114 are connected, the switches S11 to S13 connected in series between them are turned on, and the switch S25 connected in parallel to the next battery module 115 after the fourth battery module 114 and the subsequent switches S26 to S28 are turned on. In this way, any number of selected battery modules may be charged by controlling the plurality of switches S11 to S17 connected in series to a plurality of battery modules 111 to 118 and a plurality of switches S21 to S28 connected in parallel thereto using the control unit 210. In addition, when discharging the battery pack 100, the plurality of battery modules 111 to 118 may be connected in series, and for this purpose, the plurality of switches S11 to S17 connected in series may be turned on and the plurality of switches S21 to S28 connected in parallel may be turned off under the control of the control unit 210.

Meanwhile, each of the plurality of battery modules 111 to 118 may be composed of a plurality of battery cells of the same specification. Accordingly, a plurality of battery cells with the same specifications form a battery module, a plurality of battery modules form a battery module group, and two such battery module groups may form the battery pack 100. Here, the plurality of battery cells may be connected in series and/or parallel in various ways to meet the specifications of the electric vehicle. Of course, a plurality of battery packs each including the plurality of battery cells may also be connected in series and/or parallel. For example, each of the battery modules 111 to 118 may have a voltage of 50 V by connecting a plurality of battery cells having a voltage of 5 V in series, and the plurality of battery modules 111 to 118 each having a voltage of 50 V may be connected in series to form the battery module groups 110 and 120 each having a voltage of 400 V.

And, the battery pack 100 may be configured as a single package by including the BMS 200 described below within the battery pack 100.

### 2. Battery management system (BMS)

The BMS 200 estimates a state of the battery pack 100 and manages the battery pack 100 using estimated state information. For example, the BMS 200 measures the states of the battery pack 100, such as the voltage, current, and temperature, and estimates a state of charge (SOC), a state of health (SOH), and state of power (SOP) using the state information. The SOC represents the remaining capacity of the battery, and accurate prediction of the SOC makes it possible to predict a future driving distance. The SOH represents the capacity of the battery, which means the aging state of the battery and affects the number of charging and discharging times of the battery. The SOP means the maximum power that the battery can support. Prediction of the maximum power helps prevent battery overcharging or heat loss. Using this state information, the BMS 200 controls charging or discharging of the battery pack 100.

In addition, in order to manage the battery pack 100 using the BMS 200, a sensing unit (not illustrated) that senses the state of the battery pack 100 may be further included. The sensing unit may include a current sensor that senses the current of the battery pack 100, a voltage sensor that senses voltage, and a temperature sensor that senses temperature. At least one current sensor, at least voltage sensor, and at least temperature sensor may be provided. Here, the current sensor may sense the current of the battery pack 100, the current of the battery module group 110 and 120, and the current of each of the plurality of battery modules 111 to 118. Of course, the current sensor may sense the current of each of the plurality of battery cells forming the battery modules 111 to 118. Like the current sensor, the voltage sensor may also sense the voltage of the battery pack 100, the voltage of the battery module group 110 and 120, the voltage of the plurality of battery modules 111 to 118, and the voltage of the plurality of battery cells. In an embodiment of the present invention, the sensing unit may sense the current and voltage of each of the battery pack 100, the battery module group 110 and 120, the plurality of battery modules 111 to 118, and the plurality of battery cells.

And, the BMS 200 includes a charge/discharge control device. The charge/discharge control device is provided on a current path between the battery pack 100 and an external power source (i.e., charging system) or power consuming device (i.e., motor) to control charging and discharging of the battery pack 100. In addition, the BMS 200 of the present invention may include the control unit 210 as illustrated in FIG. 2. The control unit 210 controls charging and discharging of the battery pack 100 by controlling the switches S1, S2, and S3 of the battery pack 100. That is, the control unit 210 controls the charging of the first and second battery module groups 110 and 120 by controlling the first to third switches S1, S2, and S3 of the battery pack 100, and controls discharging of the first and second battery module groups 110 and 120 by controlling the third switch S3. In addition, the control unit 210 may control the plurality of switches S11 to S17 and S21 to S28 among the plurality of battery modules 111 to 118 that form each of the battery module groups 110 and 120. Therefore, under the control of the control unit 210, charging and discharging of the batteries module groups 110 and 120 may be controlled, and charging and discharging of the plurality of battery modules 111 to 118 that constitute each of the first and second battery module groups 110 and 120 may be controlled.

The control unit 210 may control charging of the battery pack 100 by comparing the voltage of the charging system 500 and that of the battery pack 100. That is, the control unit 210 communicates with the charging system 500 using a communication unit 220 to receive the maximum outputable voltage range (i.e., maximum charging voltage) of the charging system 500 and compares it with the voltage of the battery pack 100. In this case, the voltage of the battery pack 100 may be stored in a memory unit 230 or may be sensed using a sensing unit (not illustrated). For example, when the charging voltage of the charging system 500 is 800 V and the voltage of the battery pack 100 is 800 V, the control unit 210 may turn off the first and second switches S1 and S2 and turn on the third switch S3 to connect the first and second battery module groups 110 and 120 in series, thereby simultaneously charging the first and second battery module groups 110 and 120. In addition, if the charging voltage of the charging system 500 is 400 V and the voltage of the battery pack 100 is 800 V and thus it is determined that charging the battery pack 100 is impossible, the control unit 210 controls charging of the battery pack 100 by controlling the switches S1, S2, and S3 of the battery pack 100. That is, the control unit 210 may turn off the third switch S3 to separate the first and second battery module groups 110 and 120, turn on the first switch S1 to charge the first battery module group 110, and then, turn on the second switch S2 to charge the second battery module group 120.

However, when it is impossible to charge each of the first or second battery module groups 110 and 120 with the charging voltage of the charging system 500, for example, when the charging voltage of the charging system 500 is less than 400 V and the charging voltage of the first and second battery module groups 110 and 120 are 400 V, the control unit 210 may selectively charge the plurality of battery modules constituting the first or second battery module groups 110 and 120. For example, as illustrated in FIG. 3, when the battery module group 110 and 120 are respectively composed of eight battery modules 111 to 118, the battery module group 110 and 120 may be charged by selecting at least one battery module. To this end, the control unit 210 may control the plurality of switches S12 to S17 and S21 to S28 within the battery module groups 110 and 120.

Meanwhile, the communication unit 220 may be provided for communication between the control unit 210 and the charging system 500. That is, if the charging system 500 is connected to the electric vehicle 1000, communication is connected between a communication unit (not illustrated) of the charging system 500 and the communication unit 220 of the electric vehicle 1000, and the charging voltage of the charging system 500 is delivered to the control unit 210 of the electric vehicle 1000 through the communication unit 220. In addition, the memory unit 230 may store various data for driving the electric vehicle 1000 and various data for charging, discharging, and balancing of the battery pack 100. In particular, according to an embodiment of the present invention, the voltage of the battery pack 100 may be stored in the memory unit 230. This memory unit 230 may include a secure digital card (SD Card), a flash memory, a USB memory, an external hard disk, etc. Accordingly, the control unit 210 may control charging of the battery pack 100 by comparing the charging voltage of the charging system 500 received through the communication unit 220 with the voltage of the battery pack 100 obtained from the memory unit 230. Of course, as the voltage of the battery pack 100, the voltage value sensed from the sensing unit as well as the memory unit 230 may be used.

### 3. Inverter

The inverter 300 drives the motor 400 so as to enable driving of an eco-friendly vehicle. That is, the inverter 30 converts DC power of the battery pack 100 into AC power for use in the motor 400, maintains accurate charging, and affects the rotation speed and torque control of the motor 400. Of course, an eco-friendly vehicle using a DC motor does not need an inverter, but in order to use a high-performance AC motor, the inverter that can freely change the frequency, voltage, rotation speed, and torque is necessary.

### 4. Motor

The motor 400 may provide driving force to the eco-friendly vehicle. That is, the motor 400 may provide wheel driving force for the eco-friendly vehicle to move using energy supplied from the battery pack 100 through the inverter 300. This motor 400 may be configured with, for example, at least one of an induction motor, a permanent magnet synchronous motor, and a reluctance motor. Meanwhile, the eco-friendly vehicle may further include a motor controller for controlling the motor 400. The motor controller detects an accelerator pedal operation amount and speed and controls the torque and rotation speed of the motor 400 according to conditions such as vehicle speed and load so as to bring about the intended torque change therefrom. On a DC motor, current controls torque and voltage controls speed, while on an AC motor, amplitude controls torque and frequency controls speed.

### 5. Charging system

The charging system 500 is provided to charge the battery pack 100, and may include the first and second chargers 510 and 520 that supply charging power for the battery pack 100 and the on-board charger (OBC) 530 that converts AC power supplied from the first charger 510 into DC power and supplies it to the battery pack 100. Here, the first and second chargers 510 and 520 are provided outside the electric vehicle 1000 and connected to the electric vehicle 1000 for charging the electric vehicle 1000, and the OBC 530 is provided inside the electric vehicle 1000 and is connected to the first charger 510 during charging. In addition, although not illustrated, a switch that controls the connection between the chargers 510 and 520 and the electric vehicle 1000 may be provided between the first and second chargers 510 and 520 and the electric vehicle 1000.

The first charger 510 and the second charger 520 charge the battery pack 100 by supplying power for charging to the battery pack 100. In this case, the second charger 520 charges relatively faster than the first charger 510. For example, the charging current of the second charger 520 may provide at least twice as much power as the charging current of the first charger 510. This is to enable faster charging in the second charger 520 to a certain extent or more compared to the first charger 510. For example, the first charger 510 provides a charging voltage of 220 V and the second charger 520 provides a charging voltage of 400 V.

The OBC 530 may be a charger mounted on the electric vehicle for generating DC power using AC power received through the first charger 510. That is, charging power from the first charger 510 is supplied to the battery pack 100 through the OBC 530, and charging power from the second charger 520 is supplied to the battery pack 100 without passing through the OBC 530.

Meanwhile, if the charging system 500 is connected to the battery pack 100, the positive terminal of the charging system 500 and the positive terminal 541 of the battery pack 100 are connected and the negative terminal of the charging system 500 and the negative terminal 542 of the battery pack 100 are connected. In addition, the positive terminal of the battery pack 100 is connected to the positive terminals of the first and second battery module groups 110 and 120 through the first switch S1, and the negative terminal of the battery pack 100 is connected to the negative terminals of the first and second battery module groups 110 and 120 through the second switch S2.

As described above, the battery pack 100 according to an embodiment of the present invention is configured with at least two battery module groups including the first and second battery module groups 110 and 120, and the first and second battery module groups 110 and 120 are respectively connected to the charging system 500 through the first and second switches S1 and S2, and may be connected in series to each other through the third switch S3. In addition, each of the first and second battery module groups 110 and 120 includes the plurality of battery modules 111 to 118. A plurality of unit series switches S11 to S17 are connected in series among the plurality of battery modules 111 to 118, and a plurality of unit parallel switches S21 to S28 are connected in parallel to the plurality of battery modules 111 to 118. These unit series switches S11 to S17 and unit parallel switches S21 to S28 are individually controlled by the control unit 210, so that the number of connections of the battery modules 111 to 118 can be changed. FIG. 3 illustrates the form in which the first battery module group 110 includes the plurality of battery modules 111 to 118, and the unit series switches S1 1 to S17 and the unit parallel switches S21 to S28 are arranged. Although not illustrated, the second battery module group 120 may also have the same structure. During charging, in the battery pack 100 of the present invention, the first and second switches S1 and S2 are respectively controlled according to the comparison result between the charging voltage of the charging system 500 and the battery pack voltage to charge the first and second battery module groups 110 and 120, and the plurality of switches S11 to S17 and S21 to S28 connected in series and parallel to the plurality of battery modules 111 to 118 are respectively controlled to adjust the number of charging of the battery modules 111 to 118. In addition, during discharging, the third switch S3 is controlled to connect the first and second battery module groups 110 and 120 in series, and the plurality of switches S11 to S17 and S21 to S28 are respectively controlled to cause discharge from the battery modules 111 to 118. According to the present invention having this configuration, the battery pack can be charged even by using a charger having a charging voltage lower than the battery pack voltage even without being provided with a separate DC/DC converter in the electric vehicle 1000.

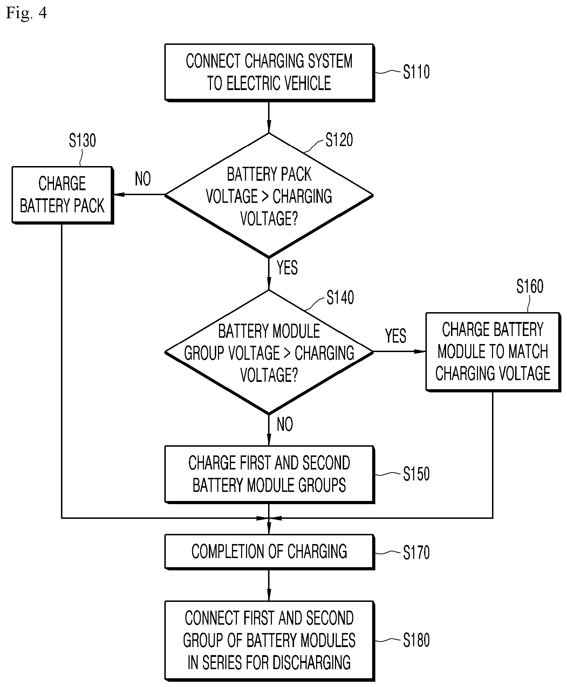

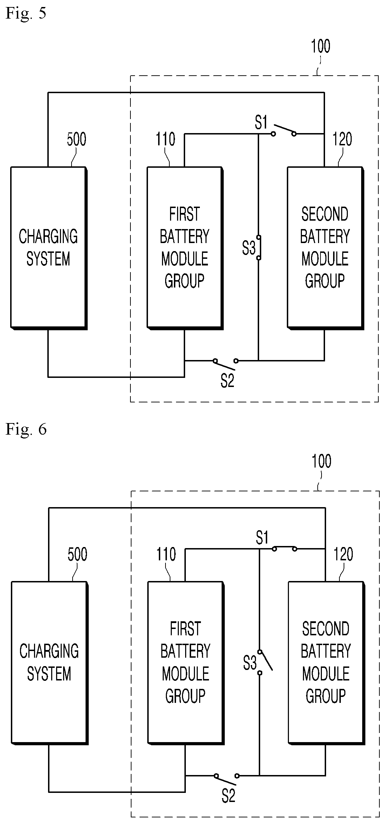

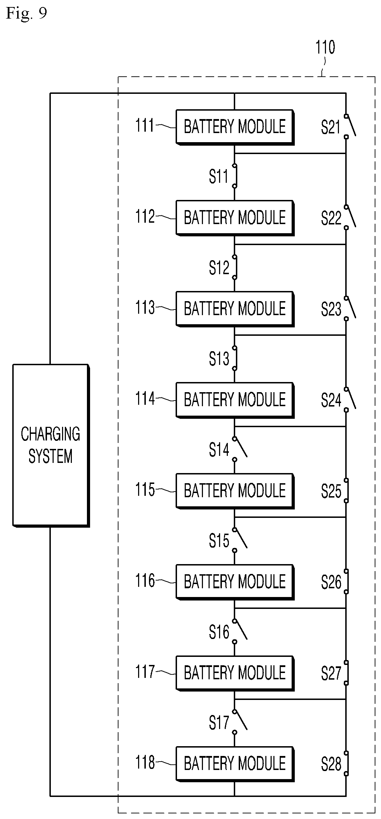

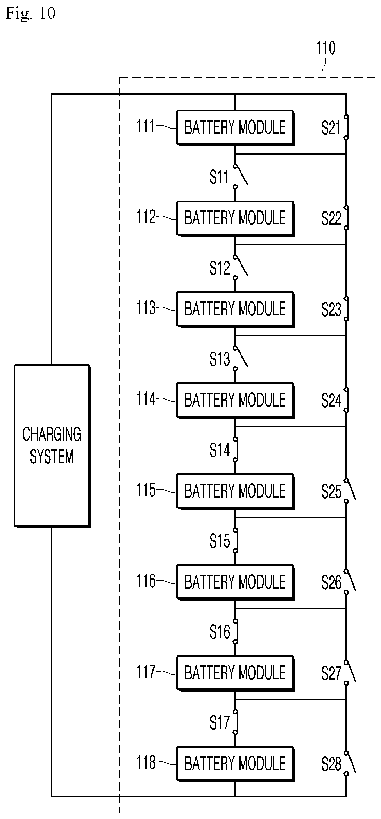

FIG. 4 is a flowchart for describing a method of controlling the battery pack according to an embodiment of the present invention, FIGS. 5 to 8 are block diagrams for describing charging and discharging of the battery pack according to an embodiment of the present invention, and FIGS. 9 and 10 are block diagrams for describing a method of charging the battery module group according to an embodiment of the present invention. The method of controlling the battery pack according to an embodiment of the present invention will be described using FIGS. 4 to 10 as follows.

Referring to FIG. 4, the method of controlling the battery pack according to an embodiment of the present invention may include a process of connecting the charging system to the electric vehicle (S110), a process of comparing the battery pack voltage and the charging voltage of the charging system (S120), a process of charging the battery pack if the battery pack voltage is not greater than the charging voltage (that is, if the charging voltage is greater than the battery pack voltage) (S130), a process of comparing the battery module group voltage and the charging voltage if the battery pack voltage is greater than the charging voltage, (S140), a process of charging the first and second battery module groups respectively, if the battery module group voltage is less than the charging voltage (i.e., the charging voltage is greater than the voltage of the battery module group) (S150), a process of charging at least one battery module of the battery module group to match the charging voltage if the battery module group voltage is greater than the charging voltage (S160), and a process of discharging the battery pack by connecting the first and second battery module groups in series to drive the electric vehicle (S180) after charging of the battery pack is completed (S170) through any one of S130, S150, and S160. The method of controlling the battery pack according to an embodiment of the present invention will be described in more detail for each process as follows.

First, the battery pack 100 according to an embodiment of the present invention may include the first and second battery module groups 110 and 120, as described using FIGS. 2 and 3. The first and second battery module groups 110 and 120 may be connected to the charging system 500 through the first and second switches S1 and S2, respectively, and may be connected to each other through the third switch S3. Here, the first switch S1 may be provided between the positive terminal of the first battery module group 110 and the positive terminal of the second battery module group 120, and the second switch S2 may be provided between the negative terminal of the first battery module group 110 and the negative terminal of the second battery module group 120. In addition, each of the the first and second battery module groups 110 and 120 may include the plurality of battery modules 111 to 118 as illustrated in FIG. 3. In this case, the first and second battery module groups 110 and 120 may be composed of the same number of battery modules. In addition, among the plurality of battery modules 111 to 118, the plurality of switches S11 to S17 may be connected in series, and the plurality of switches S21 to S28 may be connected in parallel thereto. Here, the plurality of switches S11 to S17 connected in series among the plurality of battery modules 111 to 118 control the number of connections of the battery modules 111 to 118, and the plurality of switches S21 to S28 connected in parallel connected in parallel thereto set the charging path.

S110: The electric vehicle 1000 equipped with the battery pack 100 composed of the first and second battery module groups 110 and 120, each having the plurality of battery modules 111 to 118, may be connected to the charging system 500 for charging. The charging system 500 may include the first and second chargers 510 and 520 that supply charging power to the battery pack 100 and the on-board charger (OBC) 530 that converts AC power supplied from the first charger 510 into DC power and supplies it to the battery pack 100. Here, the first and second chargers 510 and 520 are provided outside the electric vehicle 1000 and are connected to the electric vehicle 1000 for charging the electric vehicle 1000, and the OBC 530 is provided inside the electric vehicle 1000 and is connected to the first charger 510 during charging. In this case, the second charger 520 charges relatively faster than the first charger 510. For example, the charging current of the second charger 520 may provide at least twice as much power as the charging current of the first charger 510. This is to enable faster charging in the second charger 520 to a certain extent or more compared to the first charger 510. For example, the first charger 510 provides the charging voltage of 220 V and the second charger 520 provides the charging voltage of 400 V. The OBC 530 may be a charger mounted on the electric vehicle for generating DC power using AC power received through the first charger 510. That is, charging power from the first charger 510 is supplied to the battery pack 100 through the OBC 530, and charging power from the second charger 520 is supplied to the battery pack 100 without passing through the OBC 530.

S120: If the charging system 500 is connected to the electric vehicle 1000, information such as the charging voltage of the charging system 500 is delivered to the control unit 210 within the electric vehicle 1000 through a predetermined communication means. The control unit 210 compares the charging voltage of the charging system 500 and the battery pack voltage. In this case, as the battery pack voltage, information stored in the memory unit 230 within the electric vehicle 1000 may be used, or a value measured using the voltage sensor may be used.

S130: As a result of comparison using the control unit 210, if the battery pack voltage is not greater than the charging voltage of the charging system, that is, if it is less than or equal to the charging voltage of the charging system, the battery pack 100 is charged. That is, the battery pack voltage may be compared with the charging voltage of the charging system in a state where the first and second battery module groups 110 and 120 are being connected in series through the third switch S3, and if the battery pack voltage is less than or equal to the charging voltage, the battery pack 100 can be charged using the charging system. For example, when the voltage of the battery pack in which the first and second battery module groups 110 and 120 connected in series through the third switch S3 is 800 V and the charging voltage of the charging system 500 is 800 V, the battery pack can be charged with the charging voltage of 800 V. In order to charge the first and second battery module groups 110 and 120, as illustrated in FIG. 5, the third switch S3 may be turned on and the first and second switches S1 and S2 may be turned off to charge the first and second battery module groups 110 and 120 in a state of being connected in series.

S140: If the battery pack voltage is greater than the charging voltage of the charging system as a result of comparison using the control unit 210, the voltages of the battery module groups 110 and 120 are compared with the charging voltage of the charging system 500. That is, if the battery pack voltage is greater than the charging voltage of the charging system, the third switch S3 is turned off to separate the first and second battery module groups 110 and 120 and each of the voltages of the first and second battery module groups 110 and 120 is compared with the charging voltage.

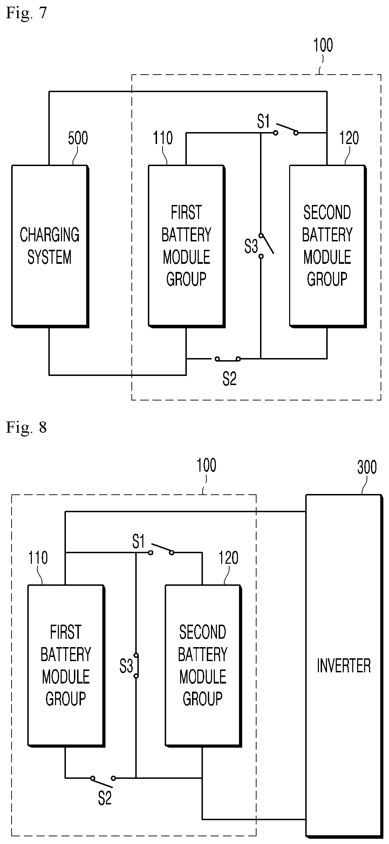

S150: As a result of the comparison, when the voltages of the battery module groups 110 and 120 are not greater than the charging voltage, that is, when the voltages of the battery module groups 110 and 120 are less than or equal to the charging voltage, the first and second battery module groups 110 and 120 are charged, respectively. That is, as illustrated in FIG. 6, the first switch S1 is turned on and the second switch S2 is turned off to charge the first battery module group 110, and as illustrated in FIG. 7, the first switch S1 is turned off and the second switch S2 is turned on to charge the second battery module group 120. For example, when the voltage of each of the first and second battery module groups 110 and 120 is 400 V and the charging voltage of the charging system 500 is 400 V, each of the first and second battery module groups 110 and 120 may be charged with a charging voltage of 400 V. The first and second switches S1 and S2 may be driven under the control of the control unit 210.

S160: When the battery module group voltages are greater than the charging voltage as a result of comparison, the battery modules 111 to 118 of each of the first and second battery module groups 110 and 120 are charged to match the charging voltage. For example, when the charging voltage is lower than 400 V, the battery modules 111 to 118 can be charged by adjusting the number of connections of the plurality of battery modules 111 to 118 to match the charging voltage. To this end, when a predetermined number of battery modules are connected from one terminal of the charging system 500 among the plurality of battery modules 111 to 118, switches between the one terminal of the charging system and the last battery module among the plurality of unit series switches S11 to S17 connected in series are turned on, and switches starting from the switch connected in parallel to the last battery module among the plurality of unit parallel switches S21 to S28 connected in parallel to switches connected to the other terminal of the charging system are turned on. As an example, as illustrated in FIG. 9, when the first to fourth battery modules 111 to 114 are connected, the switches S11 to S13 connected in series between them are turned on, and switches starting from the switch S24 connected in parallel to the fourth battery module 114 and subsequent switches S25 to S28 are turned on. As another example, as illustrated in FIG. 10, when the fifth to eighth battery modules 115 to 118 are connected, the switches S14 to S17 connected in series between them are turned on and the switches S21 to S24 connected in parallel to the first to fourth battery modules 111 to 114 are turned on. In this case, the first switch S1 between the charging system 500 and the first battery module group 110 is turned on. In this way, any number of selected battery modules can be charged by controlling the plurality of switches S11 to S17 connected in series with the plurality of battery modules 111 to 118 and the plurality of switches S21 to S28 connected in parallel thereto using the control unit 210.

S170 and S180: After the battery pack is charged through the process S130, the first and second battery module groups are charged through the process S150, or a predetermined number of battery module groups are charged through the process S160, each of the first and second battery module groups may be charged to a set maximum voltage. For example, each of the first and second battery module groups may be charged to 400 V. After the battery module group and the battery pack are charged in this way, the charging system 500 is separated and the operation of the electric vehicle may be started. The battery pack can be discharged in order to start operation of the electric vehicle. In this case, the first and second battery module groups 110 and 120 may be connected in series to discharge the battery pack. That is, as illustrated in FIG. 8, if the third switch S3 is turned on under the control of the control unit 210, the first and second battery module groups 110 and 120 may be connected in series. Accordingly, the battery pack 100 according to the present invention may include, for example, the first and second battery module groups 110 and 120 each having a voltage of 400 V and can be sequentially charged through the charging system 500 of 400 V.

Although the technical idea of the present invention as described above has been specifically described according to the embodiments described above, it should be noted that the embodiments described above are for description thereof and not for limitation. In addition, those skilled in the art of the present invention will understand that various embodiments are possible within the scope of the technical idea of the present invention.

## Claims

1. A battery pack comprising:
a first and second battery module groups;
a battery pack positive terminal connected to a positive terminal of the second battery module group and connected to an output of an external charging system;
a battery pack negative terminal connected to a negative terminal of the first battery module group is connected;
first and second switches respectively provided on a path between positive terminals and a path between negative terminals of the first and second battery module groups to open and close parallel connection paths of the first and second battery module groups; and
a third switch provided between the first and second battery module groups and provided on a path between the positive terminal of the first battery module group and the negative terminal of the second battery module group to open and close a serial connection path of the first and second battery module groups.

2. The battery pack of claim 1, wherein
the first switch is configured to open and close the path between the positive terminals of the first and second battery module groups, the second switch is configured to open and close the path between the negative terminals of the first and second battery module groups, and the third switch is configured to open and close the path between the positive terminals of the first and second battery module groups and the negative terminals of the first and second battery module groups.

3. The battery pack of claim 2, wherein
when the battery pack terminal is connected to the external charging system, the first to third switches are controlled to be turned on/off so that the first and second battery module groups are connected in series and charged at once, or the first and second battery module groups are selectively or sequentially charged, depending on a comparison result between a charging voltage of the external charging system and a battery pack voltage.

4. The battery pack of claim 3, wherein
when the charging voltage is greater than the battery pack voltage, the third switch is turned on and the first and second switches are turned off, so that the first and second battery module groups are connected in series and charged at once.

5. The battery pack of claim 3, wherein
when the charging voltage is less than the battery pack voltage and greater than voltages of the first and second battery module groups, the third switch is turned off and the first and second switches are sequentially turned on to control the first and second battery module groups to be sequentially charged.

6. The battery pack of claim 3, wherein
each of the first and second battery module groups is configured to comprise
a plurality of battery modules,
a plurality of unit series switches connected in series between the respective battery modules, and
a plurality of unit parallel switches connected in parallel to the respective battery modules, and
when the charging voltage is lower than the voltages of the first and second battery module groups, the first and second switches are sequentially turned on and the unit series switch and unit parallel switch are selectively driven to selectively charge a plurality of battery modules of each of the first and second battery module groups.

7. A method of charging the battery pack according to any one of claims 1 to 6, the method comprising:
a process of comparing a battery pack voltage and a charging voltage of an external charging system;
a process of charging the first and second battery module groups at once by connecting the first and second battery module groups in series when the charging voltage of the external charging system is greater than the battery pack voltage;
a process of sequentially charging the first and second battery module groups when the charging voltage of the external charging system is less than the battery pack voltage and greater than voltages of the first and second battery module groups; and
a process of selectively charging a plurality of battery modules of each of the first and second battery module groups when the charging voltage of the external charging system is lower than the voltages of the first and second battery module groups.

8. The battery pack charging method of claim 7, wherein
when the charging voltage is greater than the battery pack voltage, the third switch is turned on and the first and second switches are turned off, so that the first and second battery module groups are connected in series and charged at once.

9. The battery pack charging method of claim 7, wherein
when the charging voltage is less than the battery pack voltage and greater than the voltages of the first and second battery module groups, the first and second switches are sequentially turned on to sequentially charge the first and second battery module groups.

10. The battery pack charging method of claim 7, wherein
when the charging voltage is lower than the voltages of the first and second battery module groups, the first and second switches are sequentially turned on and the unit series switch and unit parallel switch are selectively controlled to be turned on/off to selectively charge a plurality of battery modules of each of the first and second battery module groups.

11. An electric vehicle comprising:
a battery pack;
a battery management system that manages the battery pack;
an inverter that converts power from the battery pack into power for driving a motor; and
a motor that drives the electric vehicle by receiving electrical energy from the battery pack through the inverter, wherein
the battery pack comprises
first and second battery module groups,
first and second switches respectively provided between a charging system and the first and second battery module groups, and
a third switch that connects the first and second battery module groups by being provided therebetween.

12. The electric vehicle of claim 11, wherein
the battery management system comprises a control unit that controls the switches by comparing a charging voltage and a battery pack voltage during charging of the battery pack.

13. The electric vehicle of claim 12, wherein
the control unit controls the switches according to a comparison result between the charging voltage of the charging system and the battery pack voltage to charge the first and second battery module groups or selectively charge a plurality of battery modules of each of the first and second battery module groups.

14. The electric vehicle of claim 13, wherein
when the charging voltage is greater than the battery pack voltage, the third switch is turned on and the first and second switches are turned off, so that the first and second battery module groups are connected in series and charged at once.

15. The electric vehicle of claim 13, wherein
when the charging voltage is less than the battery pack voltage and greater than voltages of the first and second battery module groups, the first and second switches are sequentially turned on to sequentially charge the first and second battery module groups.

16. The electric vehicle of claim 13, wherein
each of the first and second battery module groups comprises
a plurality of battery modules,
a plurality of unit series switches connected in series between the battery modules, and
a plurality of unit parallel switches connected in parallel to the battery modules, and
when the charging voltage is lower than the voltages of the first and second battery module groups, the first and second switches are sequentially turned on and the unit series switch and unit parallel switch are selectively driven to selectively charge a plurality of battery modules of each of the first and second battery module groups.

17. The electric vehicle of claim 11, wherein
the battery management system turns on the third switch during discharging of the battery pack to connect the first and second battery module groups in series and discharge the first and second battery module groups.
